Europäisches Patentamt

European Patent Office

Office européen des brevets

(19)

(11) Publication number : **0 509 848 A2**

# (12) EUROPEAN PATENT APPLICATION

(21) Application number : 92303544.8

(22) Date of filing : 21.04.92

(51) Int. Cl.⁵ : **G01N 21/41**

(30) Priority : **19.04.91 JP 115482/91**

(43) Date of publication of application :
**21.10.92 Bulletin 92/43**

(84) Designated Contracting States :
**CH DE FR GB LI**

(71) Applicant : **Kabushiki Kaisha TOPCON**
**75-1, Hasunuma-cho Itabashi-ku**
**Tokyo (JP)**

(72) Inventor : **Gisin, Nicolas**
**12, ch. Champendal 1206**
**Geneva (CH)**
Inventor : **Stamp, Patrick**
**20 rue J. Dalphin**
**CH-1227 Carouge (CH)**
Inventor : **Hori, Nobuo**
**c/o Kabushiki Kaisha Topcon, 75-1,**
**Hasunuma-cho**
**Itabashi-ku, Tokyo-to (JP)**

(74) Representative : **Maggs, Michael Norman et al**
**Kilburn & Strode 30 John Street**
**London WC1N 2DD (GB)**

(54) Measuring the cross-sectional distribution of the refractive index of an optical waveguide.

(57) Apparatus for measuring the cross-sectional distribution of the refractive index of an elongate optical waveguide (1) including an optical waveguide portion (3) and a substrate portion (2) comprises a projection system (12) for radiating a focussed beam of light onto one end surface of the optical waveguide portion (3) and a light receiving unit arranged laterally adjacent the optical waveguide (1) for receiving light (4) leaking from the optical waveguide, whereby the change in the amount of light incident on the light receiving unit (5) as the point of incidence of the focussed beam of light is moved over the end surface of the optical waveguide portion (3) is indicative of the cross-sectional distribution of the refractive index of the optical waveguide. The optical axis (13) of the projection system (12) is inclined to the length of the optical waveguide (1) and is directed generally towards the light receiving unit (5).

FIG.3

EP 0 509 848 A2

The present invention relates to an apparatus and a method of measuring the cross-sectional distribution of the refractive index of an optical waveguide for use in e.g. optical communications.

One method of measuring the cross-sectional distribution of the refractive index of an optical waveguide is the so-called refracted near field method (RNF method). The RNF method is non-destructive and provides a high measurement accuracy and a high resolution and is considered to be an excellent method of measuring the cross-sectional distribution of the refractive index of an optical waveguide.

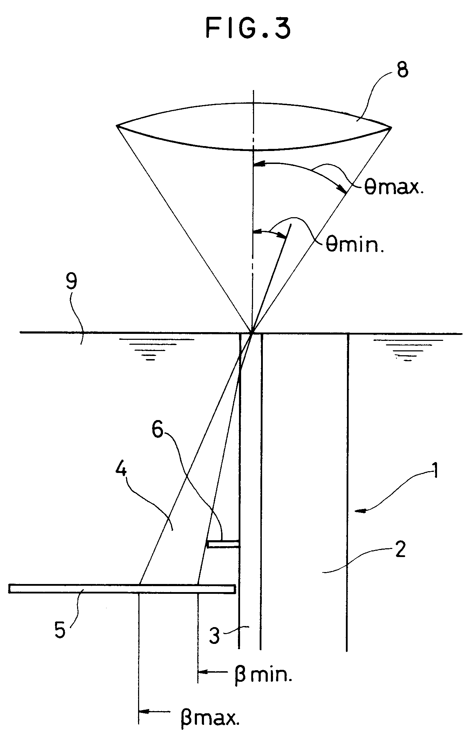

The general principle of the RNF method is illustrated schematically in Figure 3 of the accompanying drawings. An optical waveguide substrate 1 comprising an optical waveguide portion 3 on one side of a substrate portion 2 is immersed in a liquid 9 having refractive index of $n_L$, which is close to the refractive index n(r) of the optical waveguide portion 3. A laser beam is focussed by an objective lens 8 onto the end surface of the optical waveguide portion 3 at a maximum angle of incidence $\theta$, and the light leaking out of the optical waveguide portion 3 is detected and the refractive index of the optical waveguide portion 3 is measured.

If the refractive index of the optical waveguide portion 3 at the point where the laser beam enters it is n(r) and if the refractive index of the air or the liquid on the incident side of the optical waveguide portion 3 is $n_o$, the exit angle $\beta$ of the laser beam relative to the incident angle $\theta$ is given simply by the following equation (1) in accordance with Snell's law:

$$n^2(r) = n_o^2 \sin^2\theta + n_L^2 \cos^2\beta \quad (1)$$

Therefore, when the point of incidence of the laser beam is scanned across the thickness of the optical waveguide portion 3 or in the direction perpendicular thereto, the exit angle $\beta$ changes according to the refractive index n(r) at each point. Specifically, the exit angle $\beta$ decreases at those points having a higher refractive index and increases at those points having a lower refractive index.

Accordingly, by measuring the parameters of the leaking light, the refractive index n(r) of the optical waveguide portion 3 can be obtained.

Apparatus for measuring the cross-sectional distribution of the refractive index of an optical waveguide utilising the RNF method is based on the above principle.

Referring again to Figure 3, a detector 5 for receiving the light 4 leaking out of the optical waveguide portion 3 is provided beside, i.e. laterally adjacent, the optical waveguide portion 3. Also, a shield plate 6 comprising a semi-circular disk is provided for shielding that portion of the leaking light 4 closest to the optical waveguide portion 3. The detector 5 receives the leaking light 4 in a semi-annular shape, i.e. that portion of the light which is closest to the optical waveguide portion 3 is not received. The amount of light received is given by the following equation (2), in which the maximum angle of the incident light to the optical axis at the light receiving point, i.e. the focal point of the lens 8, is $\theta_{max}$ and the angle corresponding to that at which the incident light just passes the shield plate 6 is $\theta_{min}$.

$$P = \int_{\cos\theta_{max}}^{\cos\theta_{min}} I(\theta) \cdot d(\cos\theta) \quad (2)$$

In the above equation, $I(\theta)$ represents the intensity distribution of the incident light based on the angle of incidence. By making the light receiving surface of the detector 5 sufficiently large, all the leaking light 4 is received by the light receiving surface. Therefore, $\theta_{max}$ in the above equation (2) is determined by the numerical aperture (NA) and is given by the following equation (3):

$$n_o \sin\theta_{max} = NA \quad (3)$$

The maximum exit angle $\beta_{max}$ of the leaking light changes in accordance with the refracting power of the optical waveguide portion 3, that is to say, as the point of incidence of the light on the detector 5 on the outermost side is moved, and is primarily determined by the point where the light enters the optical waveguide portion 3 and also by the position of the edge of the shield plate 6 and is not influenced by the refractive index of the optical waveguide portion 3.

Furthermore, the angle of incidence $\theta_{min}$ corresponding to the minimum exit angle $\beta_{min}$ is given by the following equation (4), which is a variant of equation (1).

$$n_o^2 \sin^2\theta_{min} = n^2(r) - n_L^2 \cos^2\beta_{min} \quad (4)$$

The angle of incidence $\theta_{min}$ is an important factor for determining the refractive index of the optical waveguide portion 3. Specifically, the value for the amount of light obtained by the above equation (2) changes in accordance with the refractive index.

If it is supposed that the quantity of light received at an arbitrary point in the direction of the thickness of the optical waveguide portion 3 or the direction perpendicular thereto is P(n(r)), the value of P(n(r)) is given by the following equation (5):

$$P(n(r)) = \int_{\cos\theta_{max}}^{\cos\theta_{min}(n(r))} I(\theta) \cdot d(\cos\theta) \qquad (5)$$

If the angular dependency $I(\theta)$ of the incident light intensity has a Lambert distribution $[I(\theta) = I_o \cos\theta]$, equation (6) below is obtained from equation (5), and a correction factor $\Delta n(r)$ can be obtained when the laser spot position is scanned in the direction of the thickness of the optical waveguide portion, or the direction perpendicular thereto and the change of light quantity $\Delta P$ is measured.

$$\Delta P = a \cdot \Delta n(r) \qquad (6)$$

The proportional constant a is determined by the refractive index $n_L$, which is already known.

Normally, a laser beam is used as the light source. In this case, the incident light intensity distribution $I(\theta)$ is a Gaussian distribution rather than a Lambert distribution, and the change in the light quantity and the change of refractive index are not as simple as in equation (6). The correction factor $\Delta n(r)$ can, however, be obtained by calculation.

When measuring the cross-sectional distribution of the refractive index of an optical waveguide by the RNF method, as described above, only about one half of the light is utilised for measurement purposes, as may be seen in Figure 3. furthermore, the minimum incident angle $\theta_o$ at which total internal reflection starts inside the optical waveguide is given by the following equation (7):

$$\theta_o = \sin^{-1}\left(\frac{NA}{n(r)}\right) \qquad (7)$$

In the above equation, if $n(r) = 2.2$, the value of $\theta_o$ is 34.6°. In short, the higher the refractive index $n(r)$, the greater is the value of $\theta_o$. Thus, it is necessary to ensure that the light is incident at a greater incident angle than $\theta_o$ in order for the light to be able to leak out of an optical waveguide of high refractive index without total reflection occurring.

It is therefore desirable to have a larger angle of incidence $\theta$ in order to ensure that an adequate amount of light leaks from the optical waveguide portion 3. However, if it is attempted to increase the incident angle $\theta$ by increasing the numerical aperture of the lens, the aberration is also increased which necessitates the provision of a combination of lenses, thus making the apparatus more complicated and expensive.

It is the object of the present invention to provide a method and apparatus for measuring the cross-sectional distribution of the refractive index of an optical waveguide which effectively overcomes the above problems.

According to the present invention apparatus for measuring the cross-sectional distribution of the refractive index of an elongate optical waveguide including an optical waveguide portion and a substrate portion comprises means for holding the optical waveguide in a predetermined position, a projection system with an optical axis for radiating a focussed beam of light onto one end surface of the optical waveguide portion and a light receiving unit arranged laterally adjacent the optical waveguide for receiving light leaking from the optical waveguide, whereby change in the amount of light incident on the light receiving unit as the point of incidence of the focussed beam of light is moved over the end surface of the optical waveguide portion is indicative of the cross-sectional distribution of the refractive index of the optical waveguide, is characterised in that the optical axis of the projection system is inclined to the length of the optical waveguide and is directed generally towards the light receiving unit.

The light receiving unit may be provided laterally adjacent either the optical waveguide portion or the substrate portion.

The present invention also embraces an associated method of measuring the cross-sectional distribution of the refractive index of an elongate optical waveguide.

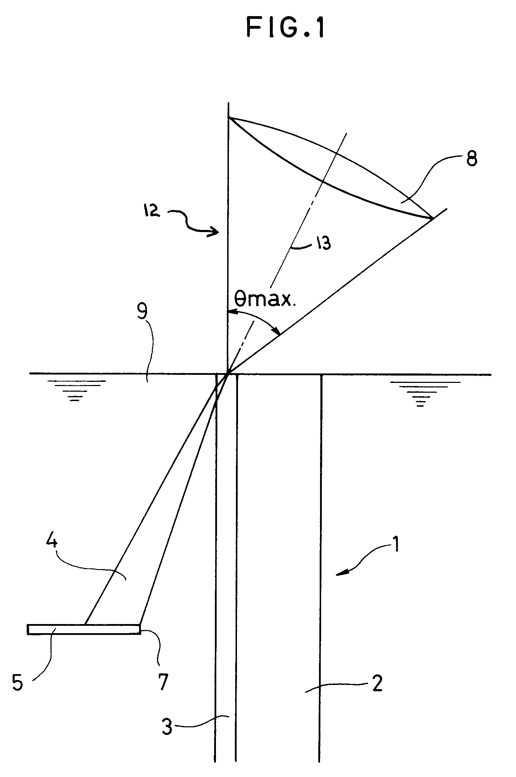

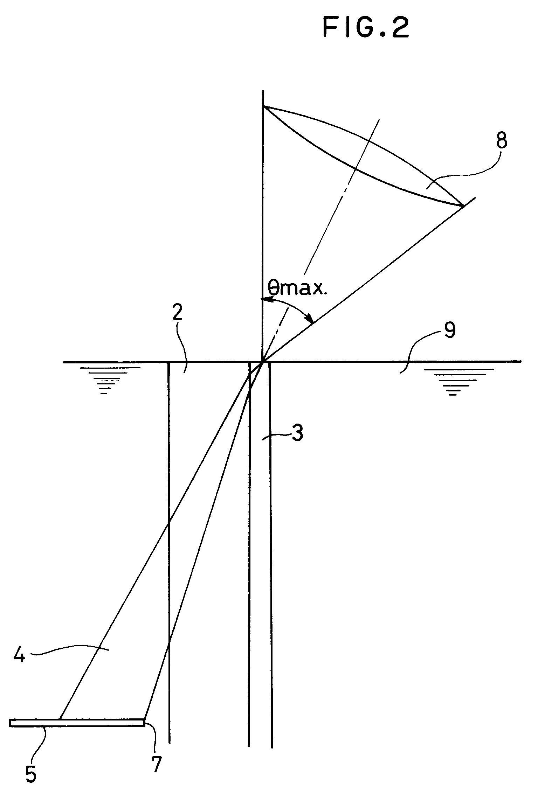

Further features and details of the invention will be apparent from the following description of the specific embodiments which is given by way of example with reference to Figures 1 and 2 of the accompanying drawings, in which:-

Figure 1 shows the basic configuration of the first embodiment of the present invention; and

Figure 2 is a similar view of the second embodiment of the present invention.

Those items which are the same as those described in relation to Figure 3 are designated with the same reference numerals and will not be described again.

Referring to Figure 1, a detector 5 for receiving the light 4 leaking out of the optical waveguide portion 3 is provided laterally adjacent the optical waveguide portion 3.

The optical axis 13 of the projection system 12 is inclined to the direction of the length of the optical waveguide 1 such that it is directed generally towards the detector 5 and not parallel to the length of the waveguide, as is conventional. Thus, the maximum incident angle θ max is the sum of the conventional angle θ max and the angle of inclination of the optical axis 13 to the length of the waveguide 1. The light receiving unit, i.e. at least the light receiving surface of detector 5, is sufficiently extensive relative to the leaking light 4 that substantially all the light 4 is incident on it. That end 7 of the detector 5 which is closest to the waveguide is positioned within the leaking light so that a portion of the leaking light 4 closer to the optical waveguide is not received. The exit angle β of the leaking light passing through the end edge 7 of the light receiving surface of the detector 5 is the same as β min of equation (4).

When the incident point of the laser beam is scanned in the direction of the thickness of the optical waveguide portion 3, or the direction perpendicular thereto, a computing element (not shown) calculates the distribution of the refractive index in accordance with equations (5) and (6) based on signals from the detector 5.

Various shapes are possible for the detector 5. It may have a wide planar shape or it is may be of rectangular shape which is long enough to transverse the leaking light.

With the above arrangement, most of the projected light leaks from the optical waveguide portion 3 and is not internally reflected. Thus, it is possible to utilize the projected light effectively, and also to increase the maximum incident angle $\theta_{max}$ even if the numerical aperture of the objective lens is small. The signal to noise ratio of the measurement is thus improved.

In the embodiment shown in Figure 2, the detector 5 is provided on the opposite side of the optical waveguide 1, i.e. laterally adjacent the substrate portion 2. The detector 5 is again sufficiently extensive relative to the leaking light 4 that substantially all the leaking light is received. The end edge 7 of the light receiving surface closest to the optical waveguide is positioned within the leaking light so that the portion of the leaking light closest to the optical waveguide is not received. The optical axis of the projections system is again inclined to the length of the waveguide but in the opposite sense to that shown in Figure 1 so it is again directed generally towards the detector 5. The function and advantages of this embodiment are similar to those described in connection with Figure 1.

The angle of inclination of the optical axis of the projection system 12 can be selected at will to suit requirements.

## Claims

**1** Apparatus for measuring the cross-sectional distribution of the refractive index of an optical waveguide, including an optical waveguide portion and a substrate portion, the apparatus comprising a projection system with an optical axis for radiating a focussed beam of light onto one end surface of the optical waveguide portion and a light receiving unit arranged laterally adjacent the optical waveguide for receiving light leaking from the optical waveguide, whereby the change in the amount of light incident on the light receiving unit as the point of incidence of the focussed beam of light is moved over the end surface of the optical waveguide portion is indicative of the cross-sectional distribution of the refractive index of the optical waveguide, characterised in that the optical axis (13) of the projection system (12) is inclined to the length of the optical waveguide (1) and is directed generally towards the light receiving unit (5).

2. Apparatus as claimed in claim 1 characterised in that the light receiving unit (5) is provided laterally adjacent the optical waveguide portion (3).

3. Apparatus as claimed in claim 1, characterised in that the light receiving unit (5) is provided laterally adjacent the substrate portion (2) remote from the optical waveguide portion (3).

4. A method of measuring the cross-sectional distribution of the refractive index of an elongate optical waveguide comprising a substrate portion and an optical waveguide portion, the method including moving a focussed beam of light over one end of the optical waveguide portion and detecting the amount of light which waveguide portion and detecting the amount of light which leaks from the optical waveguide and is incident on a light receiving unit, whereby the amount of light incident on the light receiving unit as the focussed beam of light moves is representative of the cross-sectional distribution of the refractive index of the optical waveguide, characterised by directing the focussed beam of light such that its optical axis (134) is inclined to the length of the optical waveguide (1) and is directed generally towards the light receiving unit (5).

# FIG.1

# FIG.2

# FIG.3